(19) Europäisches Patentamt
European Patent Office
Office européen des brevets

(11) EP 2 001 297 B1

(12) **EUROPÄISCHE PATENTSCHRIFT**

(45) Veröffentlichungstag und Bekanntmachung des Hinweises auf die Patenterteilung:
**17.11.2010 Patentblatt 2010/46**

(21) Anmeldenummer: **07723362.5**

(22) Anmeldetag: **19.03.2007**

(51) Int Cl.:
*A01N 43/40* (2006.01) *A01N 47/38* (2006.01)
*A01N 47/02* (2006.01) *A01N 43/90* (2006.01)
*A01N 43/88* (2006.01) *A01N 43/56* (2006.01)
*A01N 43/22* (2006.01) *A01N 41/10* (2006.01)
*A01N 37/40* (2006.01) *A01N 43/36* (2006.01)
*A01N 43/16* (2006.01) *A01N 37/28* (2006.01)

(86) Internationale Anmeldenummer:
**PCT/EP2007/002394**

(87) Internationale Veröffentlichungsnummer:
**WO 2007/112847 (11.10.2007 Gazette 2007/41)**

(54) **WIRKSTOFFKOMBINATIONEN MIT INSEKTIZIDEN EIGENSCHAFTEN**
ACTIVE INGREDIENT COMBINATIONS WITH INSECTICIDAL PROPERTIES
COMBINAISONS DE PRINCIPES ACTIFS À PROPRIÉTÉS INSECTICIDES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **29.03.2006 DE 102006014482**

(43) Veröffentlichungstag der Anmeldung:
**17.12.2008 Patentblatt 2008/51**

(73) Patentinhaber: **Bayer CropScience AG**
**40789 Monheim (DE)**

(72) Erfinder:
- **HUNGENBERG, Heike**
  **40764 Langenfeld (DE)**
- **JESCHKE, Peter**
  **51467 Bergisch Gladbach (DE)**
- **FISCHER, Rüdiger**
  **50259 Pulheim (DE)**
- **VELTEN, Robert**
  **40764 Langenfeld (DE)**
- **SCHENKE, Thomas**
  **51469 Bergisch Gladbach (DE)**
- **ANDERSCH, Wolfram**
  **51469 Bergisch Gladbach (DE)**
- **THIELERT, Wolfgang**
  **51519 Odenthal (DE)**

(56) Entgegenhaltungen:
**EP-A- 0 539 588** **WO-A-01/76369**
**WO-A-01/78511** **WO-A-03/011031**
**WO-A-2005/004603** **WO-A-2005/048712**
**WO-A-2005/122769** **WO-A-2007/112843**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 001 297 B1

Printed by Jouve, 75001 PARIS (FR)

## Beschreibung

Die vorliegende Erfindung betrifft neue Wirkstoffkombinationen, die aus mindestens einer bekannten Verbindungen der Formel (I) einerseits und mindestens einem weiteren bekannten Wirkstoff aus den Klassen der Benzoldicarbonsäureamide, der Makrolide, der Diacylhydrazine, der Carboxylate oder einer anderen Klasse bestehen und sehr gut zur Bekämpfung von tierischen Schädlingen wie Insekten und unerwünschten Akariden geeignet sind.

Es ist bereits bekannt, dass Verbindungen der Formel (I)

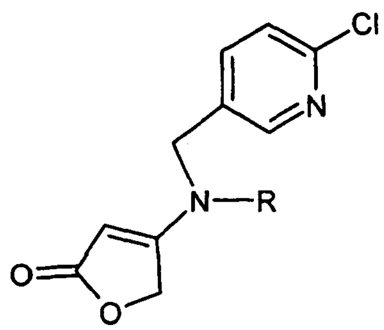

(I)

worin

R für Methyl oder Cyclopropyl steht,

insektizide Wirkung aufweisen (vgl. EP-A 0 539 588). Im Einzelnen handelt es sich dabei um die Verbindungen der Formel (Ia) und (Ib)

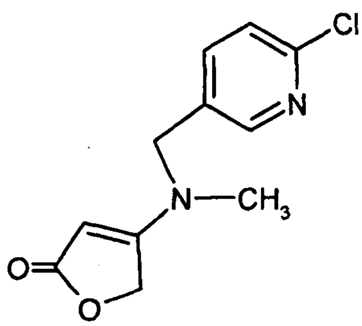

(Ia)

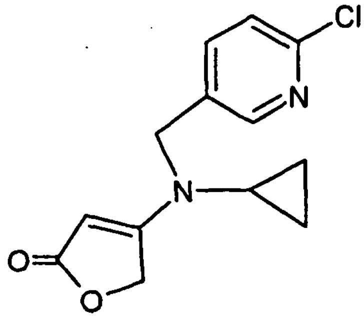

(Ib)

Weiterhin ist schon bekannt, dass zahlreiche Heterocyclen, Organozinn-Verbindungen, Benzoylharnstoffe und Pyrethroide insektizide und akarizide Eigenschaften besitzen (vgl. WO 93-22 297, WO 93-10 083, DE-A 2 641 343, EP-A-347 488, EP-A-210 487, US-A 3 264 177 und EP-A-234 045). Allerdings ist die Wirkung dieser Stoffe nicht immer befriedigend.

Es wurde nun gefunden, dass Wirkstoffkombinationen aus mindestens einer Verbindung der Formel (I) und mindestens einem der Wirkstoffe aus der Gruppe 2, ausgewählt aus

(A) Benzoldicarbonsäureamide, bevorzugt

(2-1) Flubendiamide (bekannt aus EP-A 1 006 107)

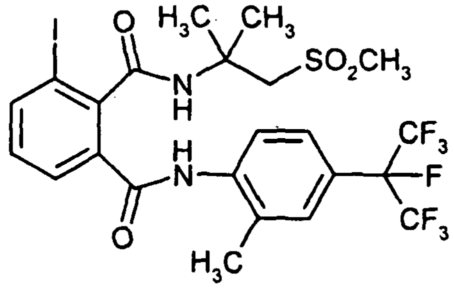

und/oder

(B) Makroliden, bevorzugt

(2-2) Spinosad (bekannt aus EP-A 0 375 316)

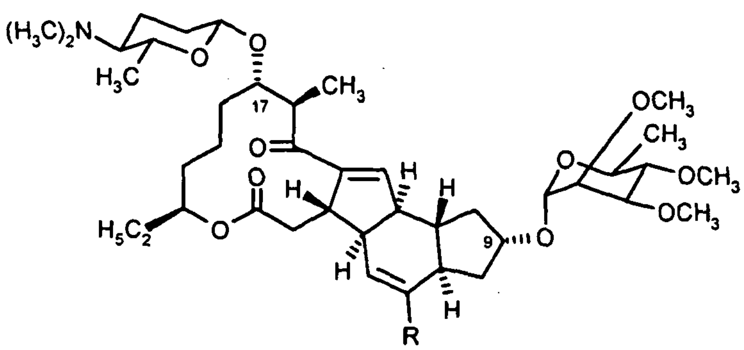

ein Gemisch aus bevorzugt
85 % Spinosyn A (R = H)
15 % Spinosyn B (R = $CH_3$)
und / oder

(2-3) Spinetoram (ISO-proposed; XDE-175) (bekannt aus WO 97/00265 A1, US 6001981 und Pest Manag. Sci. 57, 177-185, 2001)

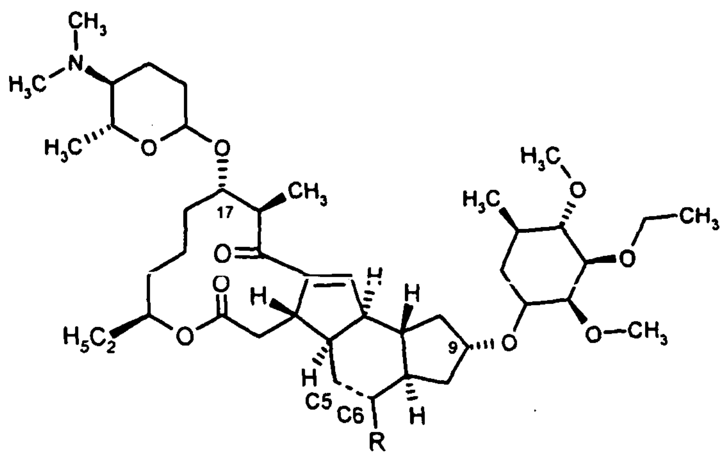

einer Mischung aus zwei Verbindungen, wobei als Hauptkomponente R für Wasserstoff steht und C5 und C6 durch eine C-C-Einfachbindung miteinander Verknüpft sind und in der Nebenkomponente R für Methyl steht und C5 und C6 durch eine C=C-Doppelbindung miteinander verknüpft sind.

(2-4) Abamectin (bekannt aus DE-A 27 17 040)
und / oder

(2-5) Emamectin-Benzoat (bekannt aus EP-A 0 089 202)

und / oder
(C) Diacylhydrazinen, bevorzugt

(2-6) Methoxyfenozide (bekannt aus EP-A 0 639 559)

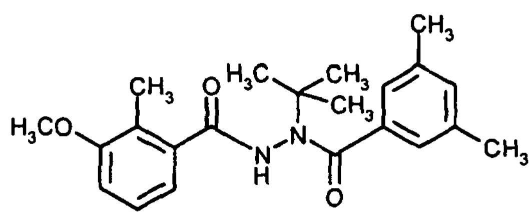

und/oder
(2-7) Tebufenozide (bekannt aus EP-A-339 854)

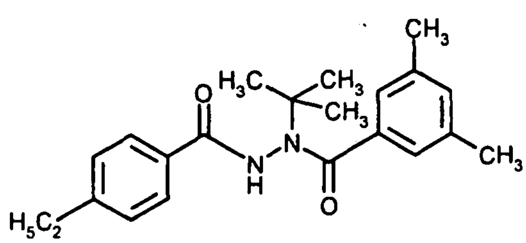

und/oder
(2-8) Chromafenozide (ANS-118) (bekannt aus EP-A 0 496 342)

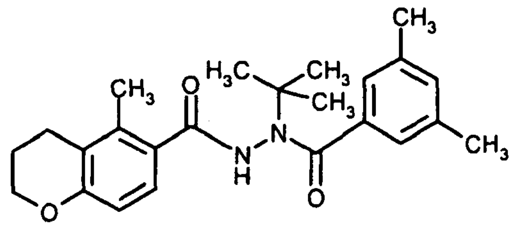

und / oder

(D) Carboxylaten, bevorzugt

(2-9) Indoxacarb (bekannt aus WO 92/11249)

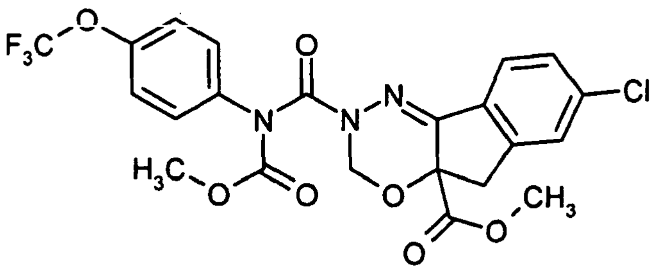

und / oder

(E) anderen insektizid oder akarizid wirksamen Substanzen, bevorzugt

(2-10) Fipronil (bekannt aus EP-A 0 295 117)

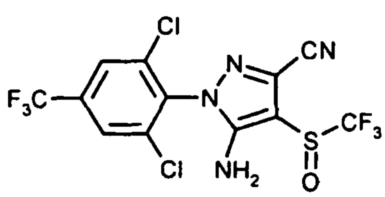

und/oder

(2-11) Ethiprole (bekannt aus DE-A 196 53 417)

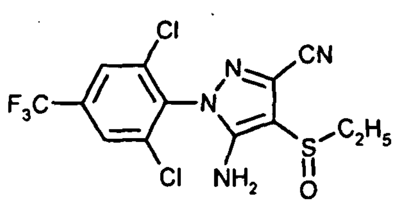

und/oder

(2-12) Flonicamid (bekannt aus EP-A 0 580 374)

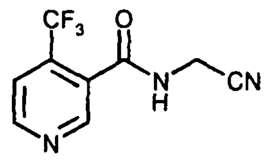

und / oder

(2-13) Chlorfenapyr (bekannt aus EP-A 0 347 488)

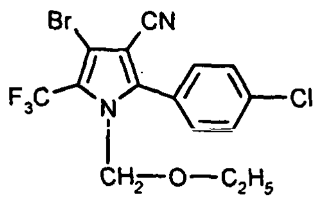

und/oder

(2-14) Buprofezin (bekannt aus Proc. Br. Crop Prot. Conf. - Pests Dis., 1981, 1, 59)

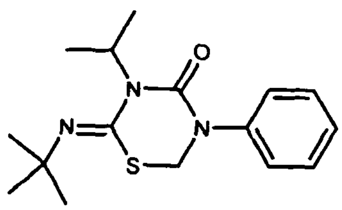

und / oder

(2-15) Pyridalyl (bekannt aus WO 96/11909)

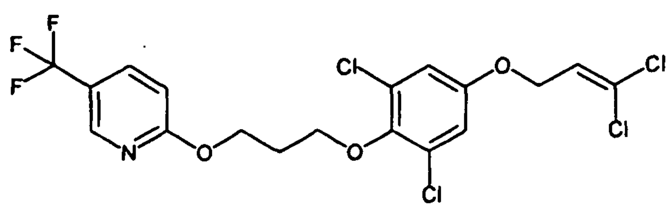

und / oder

(2-16) Rynaxypyr (ISO-proposed; DPX-E2Y45) (3-Bromo-N-{4-chlor-2-methyl-6-[(methylamino)carbonyl]phenyl}-1-(3-chlorpyridin-2-yl)-1H-pyrazol-5-carboxamid) (bekannt aus WO 03/015519)

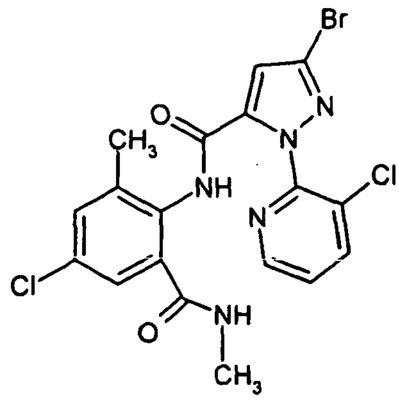

synergistisch wirksam sind und sich zur Bekämpfung tierischer Schädlinge eignen.

Überraschenderweise ist die insektizide Wirkung der erfindungsgemäßen Wirkstoffkombination wesentlich höher als die Summe der Wirkungen der einzelnen Wirkstoffe. Es liegt ein nicht vorhersehbarer echter synergistischer Effekt vor und nicht nur eine Wirkungsergänzung.

Die erfindungsgemäßen Wirkstoffkombinationen enthalten neben mindestens einem Wirkstoff der Formel (I) mindestens einen der oben aufgeführten Wirkstoffe (2-1) bis (2-16).

Bevorzugt enthalten die erfindungsgemäßen Wirkstoffkombinationen einen der Wirkstoffe (Ia) oder (Ib) und einen der oben einzeln aufgeführten Wirkstoffe (2-1) bis (2-16).

Im Einzelnen wurden die in Tabelle 1 aufgeführten Kombinationen gefunden, wobei jede Kombination für sich eine bevorzugte erfindungsgemäße Ausführungsform darstellt.

**Tabelle 1**

| Mischung enthaltend | | |
|---|---|---|
| Ia | und | 2-1 (Flubendiamid) |
| Ia | und | 2-2 (Spinosad) |
| Ia | und | 2-3 (Spinetoram) (ISO-proposed) |
| Ia | und | 2-4 (Abamectin) |
| Ia | und | 2-5 (Emamectin-Benzoat) |
| Ia | und | 2-6 (Methoxyfenozid) |
| Ia | und | 2-7 (Tebufenozid) |
| Ia | und | 2-8 (Chromafenozid) |
| Ia | und | 2-9 (Indoxacarb) |
| Ia | und | 2-10 (Fipronil) |
| Ia | und | 2-11 (Ethiprol) |
| Ia | und | 2-12 (Flonicamid) |
| Ia | und | 2-13 (Chlorfenapyr) |
| Ia | und | 2-14 (Buprofezin) |
| Ia | und | 2-15 (Pyridalyl) |
| Ia | und | 2-16 (Rynaxypyr) (ISO-proposed); ((3-Bromo-N-{4-chlor-2-methyl-6-[(methylamino)carbonyl]phenyl}-1-(3-chlorpyridin-2-yl)-1H-pyrazol-5-carboxamid)) |
| Ib | und | 2-1 (Flubendiamid) |
| Ib | und | 2-2 (Spinosad) |
| Ib | und | 2-3 (Spinetoram) (ISO-proposed) |

(fortgesetzt)

| Mischung enthaltend | | |
|---|---|---|
| Ib | und | 2-4 (Abamectin) |
| Ib | und | 2-5 (Emamectin-Benzoat) |
| Ib | und | 2-6 (Methoxyfenozid) |
| Ib | und | 2-7 (Tebufenozid) |
| Ib | und | 2-8 (Chromafenozid) |
| Ib | und | 2-9 (Indoxacarb) |
| Ib | und | 2-10 (Fipronil) |
| Ib | und | 2-11 (Ethiprol) |
| Ib | und | 2-12 (Flonicamid) |
| Ib | und | 2-13 (Chlorfenapyr) |
| Ib | und | 2-14 (Buprofezin) |
| Ib | und | 2-15 (Pyridalyl) |
| Ib | und | 2-16 (Rynaxypyr) (ISO-proposed); ((3-Bromo-N-{4-chlor-2-methyl-6-[(methylamino)carbonyl]phenyl}-1-(3-chlorpyridin-2-yl)-1H-pyrazol-5-carboxamid)) |

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse den Wirkstoffe in der Wirkstoffkombinationen in einem retativ großen Bereich variiert werden. Im allgemeinen enthalten die erfindungsgemäßen Kombinationen einen Wirkstoff der Formel (I) und einem der Wirkstoffe (2-1) bis (2-16) in den in folgendem bevorzugten und besonders bevorzugten Mischungsverhältnissen:

| | |
|---|---|
| Bevorzugtes Mischungsverhältnis: | 125:1 bis 1:125 |
| Besonders bevorzugtes Mischungsverhältnis: | 25:1 bis 1:25 |

Die Mischungsverhältnisse basieren auf Gewichtsverhältnissen. Das Verhältnis ist zu verstehen als Wirkstoff der Formel (I) : Wirkstoff (2-1) bis (2-16).

Die erfindungsgemäßen Wirkstoffkombinationen eignen sich bei guter Pflanzenverträglichkeit, günstiger Warmblütertoxizität und guter Umweltverträglichkeit zum Schutz von Pflanzen und Pflanzenorganen, zur Steigerung der Ernteerträge, Verbesserung der Qualität des Erntegutes und zur Bekämpfung von tierischen Schädlingen, insbesondere Insekten, Spinnentieren, Helminthen, Nematoden und Mollusken, die in der Landwirtschaft, im Gartenbau, bei der Tierzucht, in Forsten, in Gärten und Freizeiteinrichtungen, im Vorrats- und Materialschutz sowie auf dem Hygienesektor vorkommen. Sie können vorzugsweise als Pflanzenschutzmittel eingesetzt werden. Sie sind gegen normal sensible und resistente Arten sowie gegen alle oder einzelne Entwicklungsstadien wirksam. Zu den oben erwähnten Schädlingen gehören:

Aus der Ordnung der Anoplura (Phthiraptera) z.B. Damalinia spp., Haematopinus spp., Linognathus spp., Pediculus spp., Trichodectes spp.

Aus der Klasse der Arachnida z.B. Acarus siro, Aceria sheldoni, Aculops spp., Aculus spp., Amblyomma spp., Argas spp., Boophilus spp., Brevipalpus spp., Bryobia praetiosa, Chorioptes spp., Dermanyssus gallinae, Eotetranychus spp., Epitrimerus pyri, Eutetranychus spp., Eriophyes spp., Hemitarsonemus spp., Hyalomma spp., Ixodes spp., Latrodectus mactans, Metatetranychus spp., Oligonychus spp., Omithodoros spp., Panonychus spp., Phyllocoptruta oleivora, Polyphagotarsonemus latus, Psoroptes spp., Rhipicephalus spp., Rhizoglyphus spp., Sarcoptes spp., Scorpio maurus, Stenotarsonemus spp., Tarsonemus spp., Tetranychus spp., Vasates lycopersici.

Aus der Klasse der Bivalva z.B. Dreissena spp.

Aus der Ordnung der Chilopoda z.B. Geophilus spp., Scutigera spp.

Aus der Ordnung der Coleoptera z.B. Acanthoscelides obtectus, Adoretus spp., Agelastica alni, Agriotes spp., Amphimallon solstitialis, Anobium punctatum, Anoplophora spp., Anthonomus spp., Anthrenus spp., Apogonia spp., Atomaria spp., Attagenus spp., Bruchidius obtectus, Bruchus spp., Ceuthorhynchus spp., Cleonus mendicus, Conoderus spp., Cosmopolites spp., Costelytra zealandica, Curculio spp., Cryptorhynchus lapathi, Dermestes spp., Diabrotica spp.,

Epilachna spp., Faustinus cubae, Gibbium psylloides, Heteronychus arator, Hylamorpha elegans, Hylotrupes bajulus, Hypera postica, Hypothenemus spp., Lachnosterna consanguinea, Leptinotarsa decemlineata, Lissorhoptrus oryzophilus, Lixus spp., Lyctus spp., Meligethes aeneus, Melolontha melolontha, Migdolus spp., Monochamus spp., Naupactus xanthographus, Niptus hololeucus, Oryctes rhinoceros, Oryzaephilus surinamensis, Otiorrhynchus suicatus, Oxycetonia jucunda, Phaedon cochleariae, Phyllophaga spp., Popillia japonica, Premnotrypes spp., Psylliodes chrysocephala, Ptinus spp., Rhizobius ventralis, Rhizopertha dominica, Sitophilus spp., Sphenophorus spp., Sternechus spp., Symphyletes spp., Tenebrio molitor, Tribolium spp., Trogoderma spp., Tychius spp., Xylotrechus spp., Zabrus spp.

Aus der Ordnung der Collembola z.B. Onychiurus armatus.

Aus der Ordnung der Dermaptera z.B. Forficula auricularia.

Aus der Ordnung der Diplopoda z.B. Blaniulus guttulatus.

Aus der Ordnung der Diptera z.B. Aedes spp., Anopheles spp., Bibio hortulanus, Calliphora erythrocephala, Ceratitis capitata, Chrysomyia spp., Cochliomyia spp., Cordylobia anthropophaga, Culex spp., Cuterebra spp., Dacus oleae, Dermatobia hominis, Drosophila spp., Fannia spp., Gastrophilus spp., Hylemyia spp., Hyppobosca spp., Hypoderma spp., Liriomyza spp.. Lucilia spp., Musca spp., Nezara spp., Oestrus spp., Oscinella frit, Pegomyia hyoscyami, Phorbia spp., Stomoxys spp., Tabanus spp., Tannia spp., Tipula paludosa, Wohlfahrtia spp.

Aus der Klasse der Gastropoda z.B. Arion spp., Biomphalaria spp., Bulinus spp., Deroceras spp., Galba spp., Lymnaea spp., Oncomelania spp., Succinea spp.

Aus der Klasse der Helminthen z.B. Ancylostoma duodenale, Ancylostoma ceylanicum, Acylostoma braziliensis, Ancylostoma spp., Ascaris lubricoides, Ascaris spp., Brugia malayi, Brugia timori, Bunostomum spp., Chabertia spp., Clonorchis spp., Cooperia spp., Dicrocoelium spp, Dictyocaulus filaria, Diphyllobothrium latum, Dracunculus medinensis, Echinococcus granulosus, Echinococcus multilocularis, Enterobius vermicularis, Faciola spp., Haemonchus spp., Heterakis spp., Hymenolepis nana, Hyostrongulus spp., Loa Loa, Nematodirus spp., Oesophagostomum spp., Opisthorchis spp., Onchocerca voivuius, Ostertagia spp., Paragonimus spp., Schistosomen spp, Strongyloides fuelleborni, Strongyloides stercoralis, Stronyloides spp., Taenia saginata, Taenia solium, Trichinella spiralis, Trichinella nativa, Trichinella britovi, Trichinella nelsoni, Trichinella pseudopsiralis, Trichostrongulus spp., Trichuris trichuria, Wuchereria bancrofti.

Weiterhin lassen sich Protozoen, wie Eimeria, bekämpfen.

Aus der Ordnung der Heteroptera z.B. Anasa tristis, Antestiopsis spp., Blissus spp., Calocoris spp., Campylomma livida, Cavelerius spp., Cimex spp., Creontiades dilutus, Dasynus piperis, Dichelops furcatus, Diconocoris hewetti, Dysdercus spp., Euschistus spp., Eurygaster spp., Heliopeltis spp., Horcias nobilellus, Leptocorisa spp., Leptoglossus phyllopus, Lygus spp., Macropes excavatus, Miridae, Nezara spp., Oebalus spp., Pentomidae, Piesma quadrata, Piezodorus spp., Psallus seriatus, Pseudacysta persea, Rhodnius spp., Sahlbergella singularis, Scotinophora spp., Stephanitis nashi, Tibraca spp., Triatoma spp.

Aus der Ordnung der Homoptera z.B. Acyrthosipon spp., Aeneolamia spp., Agonoscena spp., Aleurodes spp., Aleurolobus barodensis, Aleurothrixus spp., Amrasca spp., Anuraphis cardui, Aonidiella spp., Aphanostigma piri, Aphis spp., Arboridia apicalis, Aspidiella spp., Aspidiotus spp., Atanus spp., Aulacorthum solani, Bemisia spp., Brachycaudus helichrysii, Brachycolus spp., Brevicoryne brassicae, Calligypona marginata, Carneocephala fulgida, Ceratovacuna lanigera, Cercopidae, Ceroplastes spp., Chaetosiphon fragaefolii, Chionaspis tegalensis, Chlorita onukii, Chromaphis juglandicola, Chrysomphalus ficus, Cicadulina mbila, Coccomytilus halli, Coccus spp., Cryptomyzus ribis, Dalbulus spp., Dialeurodes spp., Diaphorina spp., Diaspis spp., Doralis spp., Drosicha spp., Dysaphis spp., Dysmicoccus spp., Empoasca spp., Eriosoma spp., Erythroneura spp., Euscelis bilobatus, Geococcus coffeae, Homalodisca coagulata, Hyalopterus arundinis, Icerya spp., Idiocerus spp., Idioscopus spp., Laodelphax striatellus, Lecanium spp., Lepidosaphes spp., Lipaphis erysimi, Macrosiphum spp., Mahanarva fimbriolata, Melanaphis sacchari, Metcalfiella spp., Metopolophium dirhodum, Monellia costalis, Monelliopsis pecanis, Myzus spp., Nasonovia ribisnigri, Nephotettix spp., Nilaparvata lugens, Oncometopia spp., Orthezia praelonga, Parabemisia myricae, Paratrioza spp., Parlatoria spp., Pemphigus spp., Peregrinus maidis, Phenacoccus spp., Phloeomyzus passerinii, Phorodon humuli, Phylloxera spp., Pinnaspis aspidistrae, Planococcus spp., Protopulvinaria pyriformis, Pseudaulacaspis pentagona, Pseudococcus spp., Psylla spp., Pteromalus spp., Pyrilla spp., Quadraspidiotus spp., Quesada gigas, Rastrococcus spp., Rhopalosiphum spp., Saissetia spp., Scaphoides titanus, Schizaphis graminum, Selenaspidus articulatus, Sogata spp., Sogatella furcifera, Sogatodes spp., Stictocephala festina, Tenalaphara malayensis, Tinocallis caryaefoliae, Tomaspis spp., Toxoptera spp., Trialeurodes vaporariorum, Trioza spp., Typhlocyba spp., Unaspis spp., Viteus vitifolii.

Aus der Ordnung der Hymenoptera z.B. Diprion spp., Hoplocampa spp., Lasius spp., Monomorium pharaonis, Vespa spp.

Aus der Ordnung der Isopoda z.B. Armadillidium vulgare, Oniscus asellus, Porcellio scaber.

Aus der Ordnung der Isoptera z.B. Reticulitermes spp., Odontotermes spp.

Aus der Ordnung der Lepidoptera z.B. Acronicta major, Aedia leucomelas, Agrotis spp., Alabama argillacca, Anticarsia spp., Barathra brassicae, Bucculatrix thurberiella, Bupalus piniarius, Cacoecia podana, Capua reticulana, Carpocapsa pomonella, Cheimatobia brumata, Chilo spp., Choristoneura fumiferana, Clysia ambiguella, Cnaphalocerus

spp., Earias insulana, Ephestia kuehniella, Euproctis chrysorrhoea, Euxoa spp., Feltia spp., Galleria mellonella, Helicoverpa spp., Heliothis spp., Hofmannophila pseudospretella, Homona magnanima, Hyponomeuta padella, Laphygma spp., Lithocolletis blancardella, Lithophane antennata, Loxagrotis albicosta, Lymantria spp., Malacosoma neustria, Mamestra brassicae, Mocis repanda, Mythimna separata, Oria spp., Oulema oryzae, Panolis flammea, Pectinophora gossypiella, Phyllocnistis citrella, Pieris spp., Plutella xylostella, Prodenia spp., Pseudaletia spp., Pseudoplusia includens, Pyrausta nubilalis, Spodoptera spp., Thermesia gemmatalis, Tinea pellionella, Tineola bisselliella, Tortrix viridana, Trichoplusia spp.

Aus der Ordnung der Orthoptera z.B. Acheta domesticus, Blatta orientalis, Blattella germanica, Gryllotalpa spp., Leucophaea maderae, Locusta spp., Melanoplus spp., Periplaneta americana, Schistocerca gregaria.

Aus der Ordnung der Siphonaptera z.B. Ceratophyllus spp., Xenopsylla cheopis.

Aus der Ordnung der Symphyla z.B. Scutigerella immaculata.

Aus der Ordnung der Thysanoptera z.B. Baliothrips biformis, Enneothrips flavens, Frankliniella spp., Heliothrips spp., Hercinothrips femoralis, Kakothrips spp., Rhipiphorothrips cruentatus, Scirtothrips spp., Taeniothrips cardamoni, Thrips spp.

Aus der Ordnung der Thysanura z.B. Lepisma saccharina.

Zu den pflanzenparasitären Nematoden gehören z.B. Anguina spp., Aphelenchoides spp., Belonoaimus spp., Bursaphelenchus spp., Ditylenchus dipsaci, Globodera spp., Heliocotylenchus spp., Heterodera spp., Longidorus spp., Meloidogyne spp., Pratylenchus spp., Radopholus similis, Rotylenchus spp., Trichodorus spp., Tylenchorhynchus spp., Tylenchulus spp., Tylenchulus seminpenetrans, Xiphinema spp.

Die erfindungsgemäßen Wirkstoffkombinationen können gegebenenfalls in bestimmten Konzentrationen bzw. Aufwandmengen auch als Herbizide, Safener, Wachstumsregulatoren oder Mittel zur Verbesserung der Pflanzeneigenschaften, oder als Mikrobizide, beispielsweise als Fungizide, Antimykotika, Bakterizide, Virizide (einschließlich Mittel gegen Viroide) oder als Mittel gegen MLO (Mycoplasma-like-organism) und RLO (Rickettsia-like-organism) verwendet werden. Sie lassen sich gegebenenfalls auch als Zwischen- oder Vorprodukte für die Synthese weiterer Wirkstoffe einsetzen.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Saatgut sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Saatgut.

Die erfindungsgemäße Behandlung der Pflanzen und Pflanzenteile mit den Wirkstoffkombinationen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen, Injizieren und bei Vermehrungsmaterial, insbesondere bei Saatgut, weiterhin durch ein- oder mehrschichtiges Umhüllen.

Insbesondere eignen sich die erfindungsgemäßen Wirkstoffkombinationen zur Behandlung von Saatgut. Bevorzugt sind dabei die vorstehend als bevorzugt oder besonders bevorzugt genannten erfindungsgemäßen Kombinationen zu nennen. So entsteht ein großer Teil des durch Schädlinge verursachten Schadens an Kulturpflanzen bereits durch den Befall des Saatguts während der Lagerung und nach dem Einbringen des Saatguts in den Boden sowie während und unmittelbar nach der Keimung der Pflanzen. Diese Phase ist besonders kritisch, da die Wurzeln und Sprosse der wachsenden Pflanze besonders empfindlich sind und bereits ein geringer Schaden zum Absterben der ganzen Pflanze führen kann. Es besteht daher ein insbesondere großes Interesse daran, das Saatgut und die keimende Pflanze durch den Einsatz geeigneter Mittel zu schützen.

Die Bekämpfung von Schädlingen durch die Behandlung des Saatguts von Pflanzen ist seit langem bekannt und ist Gegenstand ständiger Verbesserungen. Dennoch ergeben sich bei der Behandlung von Saatgut eine Reihe von Problemen, die nicht immer zufrieden stellend gelöst werden können. So ist es erstrebenswert, Verfahren zum Schutz des Saatguts und der keimenden Pflanze zu entwickeln, die das zusätzliche Ausbringen von Pflanzenschutzmitteln nach der Saat oder nach dem Auflaufen der Pflanzen überflüssig machen. Es ist weiterhin erstrebenswert, die Menge des eingesetzten Wirkstoffs dahingehend zu optimieren, dass das Saatgut und die keimende Pflanze vor dem Befall durch Schädlinge bestmöglich geschützt werden, ohne jedoch die Pflanze selbst durch den eingesetzten Wirkstoff zu schädigen. Insbesondere sollten Verfahren zur Behandlung von Saatgut auch die intrinsischen insektiziden Eigenschaften transgener Pflanzen einbeziehen, um einen optimalen Schutz des Saatguts und auch der keimenden Pflanze bei einem minimalen Aufwand an Pflanzenschutzmitteln zu erreichen.

Die vorliegende Erfindung bezieht sich daher insbesondere auch auf ein Verfahren zum Schutz von Saatgut

und keimenden Pflanzen vor dem Befall von Schädlingen, indem das Saatgut mit einer erfindungsgemäßen Wirkstoffkombination behandelt wird. Das erfindungsgemäße Verfahren zum Schutz von Saatgut und keimenden Pflanzen vor dem Befall von Schädlingen umfasst ein Verfahren, in dem das Saatgut zur gleichen Zeit mit einem Wirkstoff der Formel I und einem der Wirkstoffe (2-1) bis (2-16) behandelt wird. Es umfasst auch ein Verfahren, in dem das Saatgut zu unterschiedlichen Zeiten mit einem Wirkstoff der Formel I und einem der Wirkstoffe (2-1) bis (2-16) behandelt wird. Die Erfindung bezieht sich ebenfalls auf die Verwendung der erfindungsgemäßen Wirkstoffkombinationen zur Behandlung von Saatgut zum Schutz des Saatguts und der daraus entstehenden Pflanze vor Schädlingen. Weiterhin bezieht sich die Erfindung auf Saatgut, welches zum Schutz vor Schädlingen mit einer erfindungsgemäßen Wirkstoffkombination behandelt wurde. Die Erfindung bezieht sich auch auf Saatgut, welches zur gleichen Zeit mit einem Wirkstoff der Formel I und einem der Wirkstoffe (2-1) bis (2-16) behandelt wurde. Die Erfindung bezieht sich weiterhin auf Saatgut, welches zu unterschiedlichen Zeiten mit einem Wirkstoff der Formel I und einem der Wirkstoffe (2-1) bis (2-16) behandelt wurde. Bei Saatgut, welches zu unterschiedlichen Zeiten mit einem Wirkstoff der Formel I und einem der Wirkstoffe (2-1) bis (2-16) behandelt wurde, können die einzelnen Wirkstoffe des erfindungsgemäßen Mittels in unterschiedlichen Schichten auf dem Saatgut enthalten sein. Dabei können die Schichten, die einen Wirkstoff der Formel I und einen der Wirkstoffe (2-1) bis (2-16) enthalten, gegebenenfalls durch eine Zwischenschicht getrennt sein. Die Erfindung bezieht sich auch auf Saatgut, bei dem ein Wirkstoff der Formel I und einer der Wirkstoffe (2-1) bis (2-16) als Bestandteil einer Umhüllung oder als weitere Schicht oder weitere Schichten zusätzlich zu einer Umhüllung aufgebracht sind.

Einer der Vorteile der vorliegenden Erfindung ist es, dass aufgrund der besonderen systemischen Eigenschaften der erfindungsgemäßen Wirkstoffkombinationen die Behandlung des Saatguts mit diesen Wirkstoffkombinationen nicht nur das Saatgut selbst, sondern auch die daraus hervorgehenden Pflanzen nach dem Auflaufen vor Schädlingen schützt. Auf diese Weise kann die unmittelbare Behandlung der Kultur zum Zeitpunkt der Aussaat oder kurz danach entfallen.

Ein weiterer Vorteil besteht in der synergistischen Erhöhung der insektiziden Wirksamkeit der erfindungsgemäßen Wirkstoffkombinationen gegenüber dem insektiziden Einzelwirkstoff, die über die zu erwartende Wirksamkeit der beiden einzeln angewendeten Wirkstoffe hinausgeht. Vorteilhaft ist auch die synergistische Erhöhung der fungiziden Wirksamkeit der erfindungsgemäßen Wirkstoffkombinationen gegenüber dem fungiziden Einzelwirkstoff, die über die zu erwartende Wirksamkeit des einzeln angewendeten Wirkstoffs hinausgeht. Damit wird eine Optimierung der Menge der eingesetzten Wirkstoffe ermöglicht.

Ebenso ist es als vorteilhaft anzusehen, dass die erfindungsgemäßen Wirkstoffkombinationen insbesondere auch bei transgenem Saatgut eingesetzt werden können, wobei die aus diesem Saatgut hervorgehenden Pflanzen zur Expression eines gegen Schädlinge gerichteten Proteins befähigt sind. Durch die Behandlung solchen Saatguts mit den erfindungsgemäßen Wirkstoffkombinationen können bestimmte Schädlinge bereits durch die Expression des z.B. insektiziden Proteins kontrolliert werden, und zusätzlich durch die erfindungsgemäßen Wirkstoffkombinationen vor Schäden bewahrt werden.

Die erfindungsgemäßen Wirkstoffkombinationen eignen sich zum Schutz von Saatgut jeglicher Pflanzensorte wie bereits vorstehend genannt, die in der Landwirtschaft, im Gewächshaus, in Forsten oder im Gartenbau eingesetzt wird. Insbesondere handelt es sich dabei um Saatgut von Mais, Erdnuss, Canola, Raps, Mohn, Soja, Baumwolle, Rübe (z.B. Zuckerrübe und Futterrübe), Reis, Hirse, Weizen, Gerste, Hafer, Roggen, Sonnenblume, Tabak, Kartoffeln oder Gemüse (z.B. Tomaten, Kohlgewächs). Die erfindungsgemäßen Wirkstoffkombinationen eignen sich ebenfalls zur Behandlung des Saatguts von Obstpflanzen und Gemüse wie vorstehend bereits genannt. Besondere Bedeutung kommt der Behandlung des Saatguts von Mais, Soja, Baumwolle, Weizen und Canola oder Raps zu.

Wie vorstehend bereits erwähnt, kommt auch der Behandlung von transgenem Saatgut mit einer erfindungsgemäßen Wirkstoffkombination eine besondere Bedeutung zu. Dabei handelt es sich um das Saatgut von Pflanzen, die in der Regel zumindest ein heterologes Gen enthalten, das die Expression eines Polypeptids mit insbesondere insektiziden Eigenschaften steuert. Die heterologen Gene in transgenem Saatgut können dabei aus Mikroorganismen wie *Bacillus, Rhizobium, Pseudomonas, Serratia, Trichoderma, Clavibacter, Glomus* oder *Gliocladium* stammen. Die vorliegende Erfindung eignet sich besonders für die Behandlung von transgenem Saatgut, das zumindest ein heterologes Gen enthält, das aus *Bacillus sp.* stammt und dessen Genprodukt Wirksamkeit gegen Maiszünsler und/oder Maiswurzel-Bohrer zeigt. Besonders bevorzugt handelt es sich dabei um ein heterologes Gen, das aus *Bacillus thuringiensis* stammt.

Im Rahmen der vorliegenden Erfindung wird die erfindungsgemäße Wirkstoffkombination alleine oder in einer geeigneten Formulierung auf das Saatgut aufgebracht. Vorzugsweise wird das Saatgut in einem Zustand behandelt, in dem so stabil ist, dass keine Schäden bei der Behandlung auftreten. Im Allgemeinen kann die Behandlung des Saatguts zu jedem Zeitpunkt zwischen der Ernte und der Aussaat erfolgen. Üblicherweise wird Saatgut verwendet, das von der Pflanze getrennt und von Kolben, Schalen, Stängeln, Hülle, Wolle oder Fruchtfleisch befreit wurde.

Im Allgemeinen muss bei der Behandlung des Saatguts darauf geachtet werden, dass die Menge der auf das Saatgut aufgebrachten erfindungsgemäßen Wirkstoffkombination und/oder weiterer Zusatzstoffe so gewählt wird, dass die Keimung des Saatguts nicht beeinträchtigt bzw. die daraus hervorgehende Pflanze nicht geschädigt wird. Dies ist vor allem bei Wirkstoffen zu beachten, die in bestimmten Aufwandmengen phytotoxische Effekte zeigen können.

Die Wirkstoffkombinationen können in die üblichen Formulierungen überführt werden, wie Lösungen, Emulsionen, Spritzpulver, wasser- und ölbasierte Suspensionen, Pulver, Stäubemittel, Pasten, lösliche Pulver, lösliche Granulate, Streugranulate, Suspensions-Emulsions-Konzentrate, Wirkstoff-imprägnierte Naturstoffe, Wirkstoff-imprägnierte synthetische Stoffe, Düngemittel sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln. Die Herstellung der Formulierungen erfolgt entweder in geeigneten Anlagen oder auch vor oder während der Anwendung.

Als Hilfsstoffe können solche Stoffe Verwendung finden, die geeignet sind, dem Mittel selbst oder und/oder davon abgeleitete Zubereitungen (z.B. Spritzbrühen, Saatgutbeizen) besondere Eigenschaften zu verleihen, wie bestimmte technische Eigenschaften und/oder auch besondere biologische Eigenschaften. Als typische Hilfsmittel kommen in Frage: Streckmittel, Lösemittel und Trägerstoffe.

Als Streckmittel eignen sich z.B. Wasser, polare und unpolare organische chemische Flüssigkeiten z.B. aus den Klassen der aromatischen und nicht-aromatischen Kohlenwasserstoffe (wie Paraffine, Alkylbenzole, Alkylnaphthaline, Chlorbenzole), der Alkohole und Polyole (die ggf. auch substituiert, verethert und/oder verestert sein können), der Ketone (wie Aceton, Cyclohexanon), Ester (auch Fette und Öle) und (poly-)Ether, der einfachen und substituierten Amine, Amide, Lactame (wie N-Alkylpyrrolidone) und Lactone, der Sulfone und Sulfoxide (wie Dimethylsysulfoxid).

Im Falle der Benutzung von Wasser als Streckmittel können z.B. auch organische Lösemittel als Hilfslösungsmittel verwendet werden. Als flüssige Lösemittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, ais feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Papier, Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage nicht-ionische und/oder ionische Stoffe, z.B. aus den Klassen der Alkohol-POE- und/oder POP-Ether, Säure- und/oder POP- POE-Ester, Alkyl-Aryl- und/oder POP- POE-Ether, Fett- und/oder POP- POE-Addukte, POE- und/oder POP-Polyol Derivate, POE- und/oder POP-Sorbitan- oder-Zucker-Addukte, Alky- oder Aryl-Sulfate, Sulfonate und Phosphate oder die entsprechenden PO-Ether-Addukte. Ferner geeignete Oligo- oder Polymere, z.B. ausgehend von vinylischen Monomeren, von Acrylsäure, aus EO und/oder PO allein oder in Verbindung mit z.B. (poly-) Alkoholen oder (poly-) Aminen. Ferner können Einsatz finden Lignin und seine Sulfonsäure-Derivate, einfache und modifizierte Cellulosen, aromatische und/oder aliphatische Sulfonsäuren sowie deren Addukte mit Formaldehyd.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide.

Es können Farbstoffe wie anorganische Pigmente, z.B. Eisenoxid, Titanoxid, Ferrocyanblau und organische Farbstoffe, wie Alizarin, Azo und Metallphthalocyaninfarbstoffe und Spurennährstoffe wie Salze von Eisen, Mangan, Bor, Kupfer, Kobalt, Molybdän und Zink verwendet werden.

Weitere Additive können Duftstoffe, mineralische oder vegetabile gegebenenfalls modifizierte Öle, Wachse und Nährstoffe (auch Spurennährstoffe), wie Salze von Eisen, Mangan, Bor, Kupfer, Kobalt, Molybdän und Zink sein.

Weiterhin enthalten sein können Stabilisatoren wie Kältestabilisatoren, Konservierungsmittel, Oxidationsschutzmittel, Lichtschutzmittel oder andere die chemische und / oder physikalische Stabilität verbessernde Mittel.

Die Formulierungen enthalten im allgemeinen zwischen 0,01 und 98 Gew.-% Wirkstoff, vorzugsweise zwischen 0,5 und 90 %.

Die erfindungsgemäßen Wirkstoffkombinationen können in handelsüblichen Formulierungen sowie in den aus diesen Formulierungen bereiteten Anwendungsformen in Mischung mit anderen Wirkstoffen, wie Insektiziden, Lockstoffen, Sterilantien, Bakteriziden, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Auch eine Mischung mit anderen bekannten Wirkstoffen, wie Herbiziden oder mit Düngemitteln und Wachstumsregulatoren ist möglich.

Die erfindungsgemäßen Wirkstoffkombinationen können ferner beim Einsatz als Insektizide in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne dass der zugesetzte Synergist selbst aktiv wirksam sein muss.

Der Wirkstoffgehalt der aus den handelsüblichen Formulierungen bereiteten Anwendungsformen kann in weiten Bereichen variieren. Die Wirkstoffkonzentration der Anwendungsformen kann von 0,00000001 bis zu 95 Gew.-% Wirkstoff, vorzugsweise zwischen 0,00001 und 1 Gew.-% liegen.

Die Anwendung geschieht in einer den Anwendungsformen angepassten üblichen Weise.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetically Modified Organisms) und deren Teile behandelt. Die Begriffe "Teile" bzw. "Teile von Pflanzen" oder "Pflanzenteile" wurden oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Zuckerrüben, Tomaten, Erbsen und andere Gemüsesorten, Baumwolle, Tabak, Raps, sowie Obstpflanzen (mit den Früchten Äpfel, Birnen, Zitrusfrüchten und Weintrauben) erwähnt, wobei Mais, Soja, Kartoffel, Baumwolle, Tabak und Raps besonders hervorgehoben werden. Als Eigenschaften ("Traits") werden besonders hervorgehoben die erhöhte Abwehr der Pflanzen gegen Insekten, Spinnentiere, Nematoden und Schnecken durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid-tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid- resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft

entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft mit den erfindungsgemäßen Wirkstoffkombinationen behandelt werden. Die bei den Wirkstoffkombinationen oben angegebenen Vorzugsbereiche gelten auch für die Behandlung dieser Pflanzen. Besonders hervorgehoben sei die Pflanzenbehandlung mit den im vorliegenden Text speziell aufgeführten Wirkstoffkombinationen.

Die erfindungsgemäßen Wirkstoffkombinationen wirken nicht nur gegen Pflanzen-, Hygiene- und Vorratsschädlinge, sondern auch auf dem veterinärmedizinischen Sektor gegen tierische Parasiten (Ekto- und Endoparasiten) wie Schildzecken, Lederzecken, Räudemilben, Laufmilben, Fliegen (stechend und leckend), parasitierende Fliegenlarven, Läuse, Haarlinge, Federlinge und Flöhe. Zu diesen Parasiten gehören:

Aus der Ordnung der Anoplurida z.B. Haematopinus spp., Linognathus spp., Pediculus spp., Phtirus spp., Solenopotes spp.

Aus der Ordnung der Mallophagida und den Unterordnungen Amblycerina sowie Ischnocerina z.B. Trimenopon spp., Menopon spp., Trinoton spp., Bovicola spp., Werneckiella spp., Lepikentron spp., Damalina spp., Trichodectes spp., Felicola spp.

Aus der Ordnung Diptera und den Unterordnungen Nematocerina sowie Brachycerina z.B. Aedes spp., Anopheles spp., Culex spp., Simulium spp., Eusimulium spp., Phlebotomus spp., Lutzomyia spp., Culicoides spp., Chrysops spp., Hybomitra spp., Atylotus spp., Tabanus spp., Haematopota spp., Philipomyia spp., Braula spp., Musca spp., Hydrotaea spp., Stomoxys spp., Haematobia spp., Morellia spp., Fannia spp., Glossina spp., Calliphora spp., Lucilia spp., Chrysomyia spp., Wohlfahrtia spp., Sarcophaga spp., Oestrus spp., Hypoderma spp., Gasterophilus spp., Hippobosca spp., Lipoptena spp., Melophagus spp.

Aus der Ordnung der Siphonapterida z.B. Pulex spp., Ctenocephalides spp., Xenopsylla spp., Ceratophyllus spp.

Aus der Ordnung der Heteropterida z.B. Cimex spp., Triatoma spp., Rhodnius spp., Panstrongylus spp.

Aus der Ordnung der Blattarida z.B. Blatta orientalis, Periplaneta americana, Blattela germanica, Supella spp.

Aus der Unterklasse der Acari (Acarina) und den Ordnungen der Meta- sowie Mesostigmata z.B. Argas spp., Ornithodorus spp., Otobius spp., Ixodes spp., Amblyomma spp., Boophilus spp., Dermacentor spp., Haemophysalis spp., Hyalomma spp., Rhipicephalus spp., Dermanyssus spp., Raillietia spp., Pneumonyssus spp., Sternostoma spp., Varroa spp.

Aus der Ordnung der Actinedida (Prostigmata) und Acaridida (Astigmata) z.B. Acarapis spp., Cheyletiella spp., Ornithocheyletia spp., Myobia spp., Psorergates spp., Demodex spp., Trombicula spp., Listrophorus spp., Acarus spp., Tyrophagus spp., Caloglyphus spp., Hypodectes spp., Pterolichus spp., Psoroptes spp., Chorioptes spp., Otodectes spp., Sarcoptes spp., Notoedres spp., Knemidocoptes spp., Cytodites spp., Laminosioptes spp.

Die erfindungsgemäßen Wirkstoffkombinationen eignen sich auch zur Bekämpfung von Arthropoden, die landwirtschaftliche Nutztiere, wie z.B. Rinder, Schafe, Ziegen, Pferde, Schweine, Esel, Kamele, Büffel, Kaninchen, Hühner, Puten, Enten, Gänse, Bienen, sonstige Haustiere wie z.B. Hunde, Katzen, Stubenvögel, Aquarienfische sowie sogenannte Versuchstiere, wie z.B. Hamster, Meerschweinchen, Ratten und Mäuse befallen. Durch die Bekämpfung dieser Arthropoden sollen Todesfälle und Leistungsminderungen (bei Fleisch, Milch, Wolle, Häuten, Eiern, Honig usw.) vermindert werden, so daß durch den Einsatz der erfindungsgemäßen Wirkstoffkombinationen eine wirtschaftlichere und einfachere Tierhaltung möglich ist.

Die Anwendung der erfindungsgemäßen Wirkstoffkombinationen geschieht im Veterinärsektor und bei der Tierhaltung in bekannter Weise durch enterale Verabreichung in Form von beispielsweise Tabletten, Kapseln, Tränken, Drenchen, Granulaten, Pasten, Boli, des feed-through-Verfahrens, von Zäpfchen, durch parenterale Verabreichung, wie zum Beispiel durch Injektionen (intramuskulär, subcutan, intravenös, intraperitonal u.a.), Implantate, durch nasale Applikation, durch dermale Anwendung in Form beispielsweise des Tauchens oder Badens (Dippen), Sprühens (Spray), Aufgießens (Pour-on und Spot-on), des Waschens, des Einpuderns sowie mit Hilfe von wirkstoffhaltigen Formkörpern, wie Halsbändern, Ohrmarken, Schwanzmarken, Gliedmaßenbändem, Halftern, Markierungsvorrichtungen usw.

Bei der Anwendung für Vieh, Geflügel, Haustiere etc. kann man die Wirkstoffkombinationen als Formulierungen (beispielsweise Pulver, Emulsionen, fließfähige Mittel), die die Wirkstoffe in einer Menge von 1 bis 80 Gew.-% enthalten, direkt oder nach 100 bis 10 000-facher Verdünnung anwenden oder sie als chemisches Bad verwenden.

Außerdem wurde gefunden, daß die erfindungsgemäßen Wirkstoffkombinationen eine hohe insektizide Wirkung gegen Insekten zeigen, die technische Materialien zerstören.

Beispielhaft und vorzugsweise - ohne jedoch zu limitieren - seien die folgenden Insekten genannt:

Käfer wie Hylotrupes bajulus, Chlorophorus pilosis, Anobium punctatum, Xestobium rufovillosum, Ptilinus pecticornis, Dendrobium pertinex, Ernobius mollis, Priobium carpini, Lyctus brunneus, Lyctus africanus, Lyctus planicollis, Lyctus linearis, Lyctus pubescens, Trogoxylon aequale, Minthes rugicollis, Xyleborus spec. Tryptodendron spec. Apate monachus, Bostrychus capucins, Heterobostrychus brunneus, Sinoxylon spec. Dinoderus minutus;

Hautflügler wie Sirex juvencus, Urocerus gigas, Urocerus gigas taignus, Urocerus augur;

Termiten wie Kalotermes flavicollis, Cryptotermes brevis, Heterotermes indicola, Reticulitermes flavipes, Reticulitermes santonensis, Reticulitermes lucifugus, Mastotermes darwiniensis, Zootermopsis nevadensis, Coptotermes formosanus;

Borstenschwänze wie Lepisma saccharina.

Unter technischen Materialien sind im vorliegenden Zusammenhang nicht-lebende Materialien zu verstehen, wie vorzugsweise Kunststoffe, Klebstoffe, Leime, Papiere und Kartone, Leder, Holz, Holzverarbeitungsprodukte und Anstrichmittel.

Die anwendungsfertigen Mittel können gegebenenfalls noch weitere Insektizide und gegebenenfalls noch ein oder mehrere Fungizide enthalten.

Hinsichtlich möglicher zusätzlicher Zumischpartner sei auf die oben genannten Insektizide und Fungizide verwiesen.

Zugleich können die erfindungsgemäßen Wirkstoffkombinationen zum Schutz vor Bewuchs von Gegenständen, insbesondere von Schiffskörpern, Sieben, Netzen, Bauwerken, Kaianlagen und Signalanlagen, welche mit See- oder Brackwasser in Verbindung kommen, eingesetzt werden.

Weiter können die erfindungsgemäßen Wirkstoffkombinationen allein oder in Kombinationen mit anderen Wirkstoffen als Antifouling-Mittel eingesetzt werden.

Die Wirkstoffkombinationen eignen sich auch zur Bekämpfung von tierischen Schädlingen im Haushalts-, Hygiene- und Vorratsschutz, insbesondere von Insekten, Spinnentieren und Milben, die in geschlossenen Räumen, wie beispielsweise Wohnungen, Fabrikhallen, Büros, Fahrzeugkabinen u.ä. vorkommen. Sie können zur Bekämpfung dieser Schädlinge allein oder in Kombination mit anderen Wirk- und Hilfsstoffen in Haushaltsinsektizid-Produkten verwendet werden. Sie sind gegen sensible und resistente Arten sowie gegen alle Entwicklungsstadien wirksam. Zu diesen Schädlingen gehören:

Aus der Ordnung der Scorpionidea z.B. Buthus occitanus.

Aus der Ordnung der Acarina z.B. Argas persicus, Argas reflexus, Bryobia ssp., Dermanyssus gallinae, Glyciphagus domesticus, Omithodorus moubat, Rhipicephalus sanguineus, Trombicula alfreddugesi, Neutrombicula autumnalis, Dermatophagoides pteronissimus, Dermatophagoides forinae.

Aus der Ordnung der Araneae z.B. Aviculariidae, Araneidae.

Aus der Ordnung der Opiliones z.B. Pseudoscorpiones chelifer, Pseudoscorpiones cheiridium, Opiliones phalangium.

Aus der Ordnung der Isopoda z.B. Oniscus asellus, Porcellio scaber.

Aus der Ordnung der Diplopoda z.B. Blaniulus guttulatus, Polydesmus spp.

Aus der Ordnung der Chilopoda z.B. Geophilus spp.

Aus der Ordnung der Zygentoma z.B. Ctenolepisma spp., Lepisma saccharina, Lepismodes inquilinus.

Aus der Ordnung der Blattaria z.B. Blatta orientalies, Blattella germanica, Blattella asahinai, Leucophaea maderae, Panchlora spp., Parcoblatta spp., Periplaneta australasiae, Periplaneta americana, Periplaneta brunnea, Periplaneta fuliginosa, Supella longipalpa.

Aus der Ordnung der Saltatoria z.B. Acheta domesticus.

Aus der Ordnung der Dermaptera z.B. Forficula auricularia.

Aus der Ordnung der Isoptera z.B. Kalotermes spp., Reticulitermes spp.

Aus der Ordnung der Psocoptera z.B. Lepinatus spp., Liposcelis spp.

Aus der Ordnung der Coleoptera z.B. Anthrenus spp., Attagenus spp., Dermestes spp., Latheticus oryzae, Necrobia spp., Ptinus spp., Rhizopertha dominica, Sitophilus granarius, Sitophilus oryzae, Sitophilus zeamais, Stegobium paniceum.

Aus der Ordnung der Diptera z.B. Aedes aegypti, Aedes albopictus, Aedes taeniorhynchus, Anopheles spp., Calliphora erythrocephala, Chrysozona pluvialis, Culex quinquefasciatus, Culex pipiens, Culex tarsalis, Drosophila spp., Fannia canicularis, Musca domestica, Phlebotomus spp., Sarcophaga carnaria, Simulium spp., Stomoxys calcitrans, Tipula paludosa.

Aus der Ordnung der Lepidoptera z.B. Achroia grisella, Galleria mellonella, Plodia interpunctella, Tinea cloacella, Tinea pellionella, Tineola bisselliella.

Aus der Ordnung der Siphonaptera z.B. Ctenocephalides canis, Ctenocephalides felis, Pulex irritans, Tunga penetrans, Xenopsylla cheopis.

Aus der Ordnung der Hymenoptera z.B. Camponotus herculeanus, Lasius fuliginosus, Lasius niger, Lasius umbratus, Monomorium pharaonis, Paravespula spp., Tetramorium caespitum.

Aus der Ordnung der Anoplura z.B. Pediculus humanus capitis, Pediculus humanus corporis, Pemphigus spp., Phylloera vastatrix, Phthirus pubis.

Aus der Ordnung der Heteroptera z.B. Cimex hemipterus, Cimex lectularius, Rhodinus prolixus, Triatoma infestans.

Die Anwendung im Bereich der Haushaltsinsektizide erfolgt allein oder in Kombination mit anderen geeigneten

Wirkstoffen wie Phosphorsäureestern, Carbamaten, Pyrethroiden, Neonicotinoiden, Wachstumsregulatoren oder Wirkstoffen aus anderen bekannten Insektizidklassen.

Die Anwendung erfolgt in Aerosolen, drucklosen Sprühmitteln, z.B. Pump- und Zerstäubersprays, Nebelautomaten, Foggern, Schäumen, Gelen, Verdampferprodukten mit Verdampferplättchen aus Cellulose oder Kunststoff, Flüssigverdampfern, Gel- und Membranverdampfern, propellergetriebenen Verdampfern, energielosen bzw. passiven Verdampfungssystemen, Mottenpapieren, Mottensäckchen und Mottengelen, als Granulate oder Stäube, in Streuködern oder Köderstationen.

Die gute insektizide und akarizide Wirkung der erfindungsgemäßen Wirkstoffkombinationen geht aus den nachfolgenden Beispielen hervor. Während die einzelnen Wirkstoffe in der Wirkung Schwächen aufweisen, zeigen die Kombinationen eine Wirkung, die über eine einfache Wirkungssummierung hinausgeht.

Ein synergistischer Effekt liegt bei Insektiziden und Akariziden immer dann vor, wenn die Wirkung der Wirkstoffkombinationen größer ist als die Summe der Wirkungen der einzeln applizierten Wirkstoffe.

Die zu erwartende Wirkung für eine gegebene Kombination zweier Wirkstoffe kann nach S.R. Colby, Weeds 15 (1967), 20-22 wie folgt berechnet werden:

Wenn

X den Abtötungsgrad, ausgedrückt in % der unbehandelten Kontrolle, beim Einsatz des Wirkstoffes A in einer Aufwandmenge von m g/ha oder in einer Konzentration von m ppm bedeutet,

Y den Abtötungsgrad, ausgedrückt in % der unbehandelten Kontrolle, beim Einsatz des Wirkstoffes B in einer Aufwandmenge von n g/ha oder in einer Konzentration von n ppm bedeutet und

E den Abtötungsgrad, ausgedrückt in % der unbehandelten Kontrolle, beim Einsatz der Wirkstoffe A und B in Aufwandmengen von m und n g/ha oder in einer Konzentration von m und n ppm bedeutet,

dann ist

$$E = X + Y - \frac{X \cdot Y}{100}$$

Ist der tatsächliche Abtötungsgrad größer als berechnet, so ist die Kombination in ihrer Abtötung überadditiv, d.h. es liegt ein synergistischer Effekt vor. In diesem Fall muss der tatsächlich beobachtete Abtötungsgrad größer sein als der aus der oben angeführten Formel errechnete Wert für den erwarteten Abtötungsgrad (E).

Beispiel A

**Aphis gossypii -Test**

| | | |
|---|---|---|
| Lösungsmittel: | 7 | Gewichtsteile Dimethylformamid |
| Emulgator: | 2 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Baumwollblätter (*Gossypium hirsutum*), die stark von der Baumwollblattlaus (*Aphis gossypii*) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden. Die ermittelten Abtötungswerte verrechnet man nach der Colby-Formel (siehe Blatt 1).

Bei diesem Test zeigen z. B. die folgenden Wirkstoffkombinationen gemäß vorliegender Anmeldung eine synergistisch verstärkte Wirksamkeit im Vergleich zu den einzeln angewendeten Wirkstoffen:

Tabelle A, Seite 1

| Pflanzenschädigende Insekten<br>**Aphis gossypii - Test** | | | |
|---|---|---|---|
| **Wirkstoff** | **Konzentration in ppm** | **Abtötung in % nach 1^d^** | |
| **Verbindung (Ia)** | 0,8<br>0,16 | 55<br>20 | |
| **Verbindung (Ib)** | 4<br>0,8 | 80<br>45 | |
| **Buprofezin** | 100 | 5 | |
| **Verbindung (Ia) + Buprofezin (1:125)**<br>erfindungsgemäß | **0,8 + 100** | **gef.***<br>**90** | **ber.****<br>**57,25** |
| **Emamectin-benzoate** | 20 | 10 | |
| **Verbindung (Ia) + Emamectin-benzoate (1 : 125)**<br>erfindungsgemäß | **0,16 + 20** | **gef.***<br>**80** | **ber.****<br>**28** |
| **Verbindung (Ib) + Emamectin-benzoate (1 : 25)**<br>erfindungsgemäß | **0,8 + 20** | **gef.***<br>**95** | **ber.****<br>**50,5** |
| **Indoxacarb** | 100 | 0 | |
| **Verbindung (Ib) + Indoxacarb (1 : 125)**<br>erfindungsgemäß | **0,8 + 100** | **gef.***<br>**85** | **ber.****<br>**45** |
| **Methoxyfenozide** | 100 | 0 | |
| **Verbindung (Ia) + Methoxyfenozide (1 : 625)**<br>erfindungsgemäß | **0,16 + 100** | **gef.***<br>**60** | **ber.**<br>**20**** |
| **Verbindung (Ib) + Methoxyfenozide (1 : 25)**<br>erfindungsgemäß | **4 + 100** | **gef.***<br>**95** | **ber.****<br>**80** |
| **Pyridalyl** | 100 | 5 | |
| **Verbindung (Ib) + Pyridalyl (1 : 125)**<br>erfindungsgemäß | **0,8 + 100** | **gef.***<br>**85** | **ber.****<br>**47,75** |
| * gef. = gefundene Wirkung<br>** ber. = nach der Colby-Formel berechnete Wirkung | | | |

Tabelle A, Seite 2

| Pflanzenschädigende Insekten<br>**Aphis gossypii - Test** | | |
|---|---|---|
| **Wirkstoff** | **Konzentration in ppm** | **Abtötung in % nach 6^d^** |
| **Verbindung (Ib)** | 0,8 | 50 |
| | 0,16 | 0 |
| **Ethiprole** | 0,8 | 30 |

(fortgesetzt)

| Pflanzenschädigende Insekten<br>**Aphis gossypii - Test** | | |
|---|---|---|
| **Wirkstoff** | **Konzentration in ppm** | **Abtötung in % nach 6d** |
| **Verbindung (Ib) + Ethiprole (1 : 5)** erfindungsgemäß | **0,16 + 0,8** | **gef.*** **60** / **ber.**** **30** |
| **Fipronil** | 20 | 70 |
| **Verbindung (Ib)+ Fipronil (1 : 25)** erfindungsgemäß | **0,8 + 20** | **gef.*** **100** / **ber.**** **85** |
| **Rynaxapyr** | 0,8 | 15 |
| **Verbindung (Ia) + Rynaxapyr (1 : 5)** erfindungsgemäß | **0,16 + 0,8** | **gef.*** **30** / **ber.**** **15** |
| *gef.=gefundene Wirkung<br>** ber. = nach der Colby-Formel berechnete Wirkung | | |

Beispiel **B**

**Myzus persicae -Test**

| | | |
|---|---|---|
| Lösungsmittel: | 7 | Gewichtsteile Dimethylformamid |
| Emulgator: | 2 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter *(Brassica oleracea),* die stark von der Grünen Pfirsichblattlaus *(Myzus persicae)* befallen sind, werden durch Tauchen in die Wirkstoffzubereitung der gewünschten Konzentration behandelt.

Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden. Die ermittelten Abtötungswerte verrechnet man nach der Colby-Formel (siehe Blatt 1).

Bei diesem Test zeigen z. B. die folgenden Wirkstoffkombinationen gemäß vorliegender Anmeldung eine synergistisch verstärkte Wirksamkeit im Vergleich zu den einzeln angewendeten Wirkstoffen:

Tabelle B, Seite 1

| Pflanzenschädigende Insekten<br>**Myzus persicae - Test** | | |
|---|---|---|
| **Wirkstoff** | **Konzentration in ppm** | **Abtötung in % nach 1d** |
| **Verbindung (Ia)** | 0,8<br>0,16 | 45<br>10 |
| **Verbindung (Ib)** | 4<br>0,8 | 70<br>10 |
| **Abamectin** | 100 | 55 |
| **Verbindung (Ia) + Abamectin (1 : 125)** | **0,8 + 100** | **gef.*** **85** / **ber.**** **75,25** |

(fortgesetzt)

| Pflanzenschädigende Insekten<br>**Myzus persicae - Test** | | |
|---|---|---|
| Wirkstoff | Konzentration in ppm | Abtötung in % nach 1d |
| erfindungsgemäß | | |
| **Verbindung (Ib) + Abamectin (1 : 125)**<br>erfindungsgemäß | **0,8 + 100** | gef.* **70** ber.** **59,5** |
| **Buprofezin** | 100 | 0 |
| **Verbindung (Ia) + Buprofezin (1 : 25)**<br>erfindungsgemäß | **0,8 + 100** | gef.* **60** ber.** **45** |
| **Methoxyfenozide** | 100 | 0 |
| **Verbindung (Ia) + Methoxyfenozide (1 : 625)**<br>erfindungsgemäß | **0,16 + 100** | gef.* **45** ber.** **10** |
| **Verbindung (Ib)+ Methoxyfenozide (1 :125)**<br>erfindungsgemäß | **0,8 + 100** | gef.* **25** ber.** **10** |
| Rynaxapyr | 4 | 30 |
| **Verbindung (Ia) + Rynaxapyr (1 : 5)**<br>erfindungsgemäß | **0,8 + 4** | gef.* **80** ber.** **61,5** |
| Spinosad | 100 | 5 |
| **Verbindung (Ib) + Spinosad (1 : 25)**<br>erfindungsgemäß | **4 + 100** | gef.* **90** ber.** **71,5** |
| *gef.=gefundene Wirkung<br>** ber. = nach der Colby-Formel berechnete Wirkung | | |

Tabelle B, Seite 3

| Pflanzenschädigende Insekten<br>**Myzus persicae - Test** | | |
|---|---|---|
| Wirkstoff | Konzentration in ppm | Abtötung in % nach 6d |
| **Verbindung (Ia)** | 0,8<br>0,16 | 50<br>0 |
| **Verbindung (Ib)** | 4<br>0,16 | 33<br>0 |
| Fipronil | 4 | 0 |
| **Verbindung (Ib) + Fipronil (1 : 25)**<br>erfindungsgemäß | **0,16 + 4** | gef.* **15** ber.** **0** |
| Flubendiamid | 100 | 6 |
| **Verbindung (Ib) +** | | gef.* ber.** |

(fortgesetzt)

| Pflanzenschädigende Insekten **Myzus persicae - Test** | | | |
|---|---|---|---|
| **Wirkstoff** | **Konzentration in ppm** | **Abtötung in % nach 6[d]** | |
| **Flubendiamid (1:25)** erfindungsgemäß | **4 + 100** | **56** | **37,02** |
| Indoxacarb | 100 | 20 | |
| **Verbindung (Ia) + Indoxacarb (1 : 125)** erfindungsgemäß | **0,8 + 100** | **gef.*** **85** | **ber.**** **64** |
| Pyridalyl | 100 | 0 | |
| **Verbindung (Ia) + Pyridalyl (1 : 625)** erfindungsgemäß | **0,16 + 100** | **gef.*** **30** | **ber.**** **0** |
| Spinosad | 100 | 5 | |
| **Verbindung (Ia) + Spinosad (1 : 125)** erfindungsgemäß | **0,8 + 100** | **gef.*** **71** | **ber.**** **52,5** |
| * gef.=gefundene Wirkung ** ber. = nach der Colby-Formel berechnete Wirkung | | | |

**Patentansprüche**

**1.** Wirkstoffkombinationen enthaltend mindestens eine Verbindung der Formel (I)

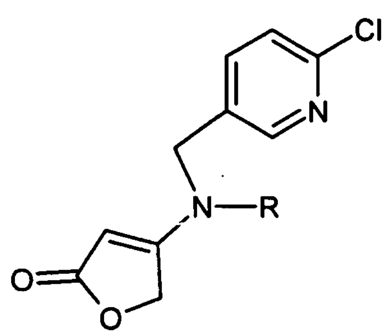

(I)

worin

R für Methyl oder Cyclopropyl steht,

und mindestens einen der Wirkstoffe, ausgewählt aus

(A) Benzoldicarbonsäureamide,

(2-1) Flubendiamide

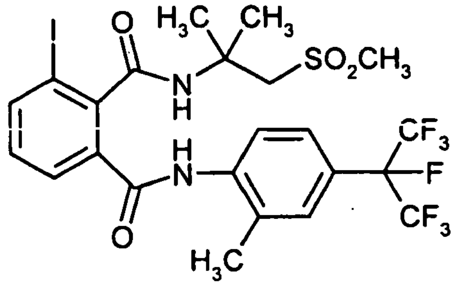

und/oder

(B) Makroliden, bevorzugt

(2-2) Spinosad

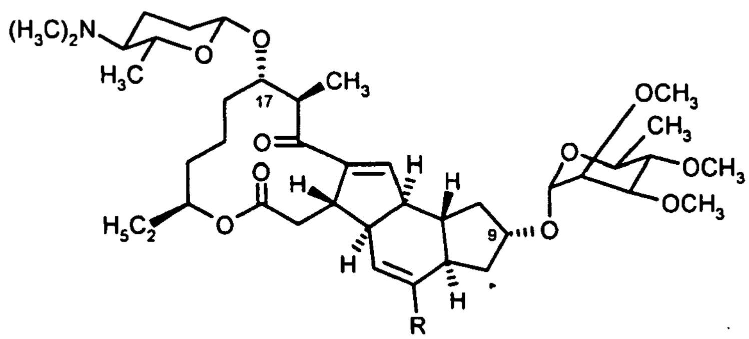

ein Gemisch aus bevorzugt
85 % Spinosyn A (R = H)
15 % Spinosyn B (R = $CH_3$)
und / oder
(2-3) Spinetoram (ISO-proposed; XDE-175) (bekannt aus WO 97/00265 A1, US 6001981 und *Pest Manag. Sci.* 57, 177-185, 2001)

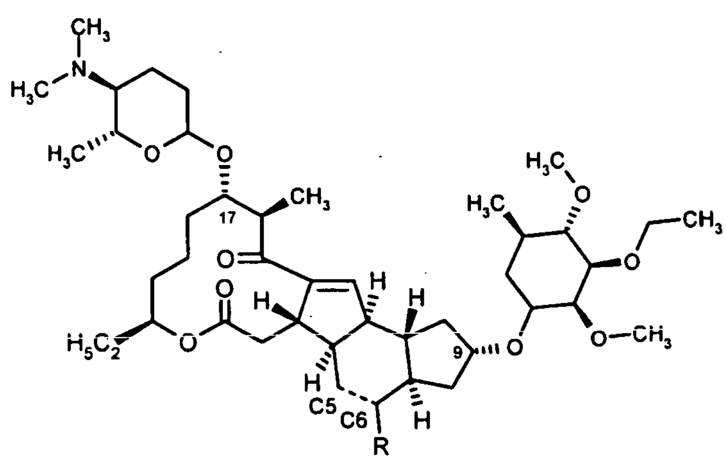

einer Mischung aus zwei Verbindungen, wobei als Hauptkomponente R für Wasserstoff steht und C5 und

C6 durch eine C-C-Einfachbindung miteinander Verknüpft sind und in der Nebenkomponente R für Methyl steht und C5 und C6 durch eine C=C-Doppelbindung miteinander verknüpft sind.
(2-4) Abamectin (bekannt aus DE-A 27 17 040)
und / oder
(2-5) Emamectin-Benzoat (bekannt aus EP-A 0 089 202)

und / oder
(C) Diacylhydrazinen,

(2-6) Methoxyfenozide

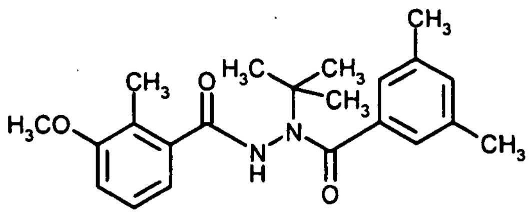

und/oder
(2-7) Tebufenozide

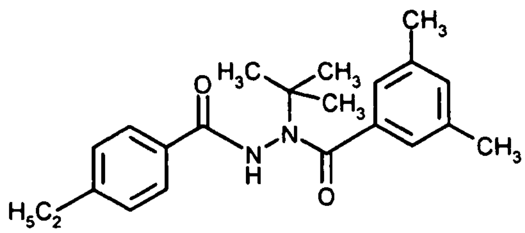

und/oder
(2-8) Chromafenozide (ANS-118)

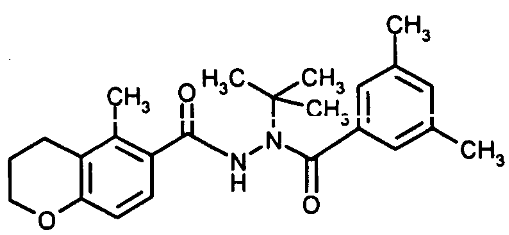

und / oder
(D) Carboxylaten,

(2-9) Indoxacarb

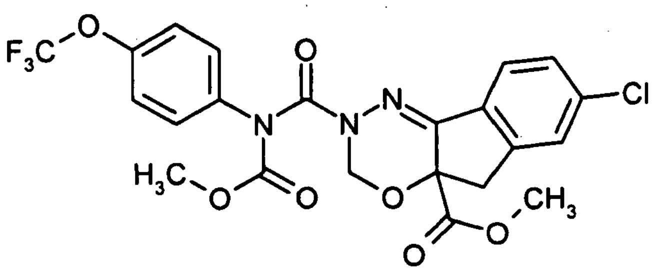

und / oder
(E) anderen insektizid oder akarizid wirksamen Substanzen,

(2-10) Fipronil

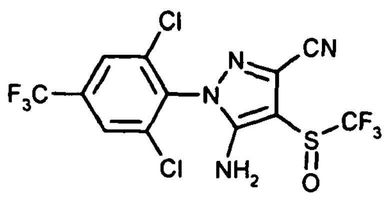

und/oder
(2-11) Ethiprole

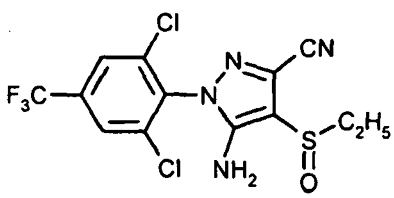

und/oder
(2-12) Flonicamid

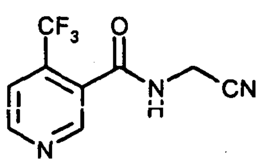

und / oder
(2-13) Chlorfenapyr

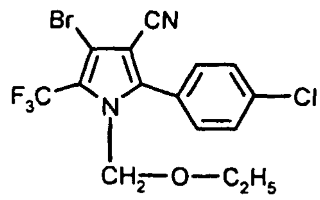

und / oder
(2-14) Buprofezin

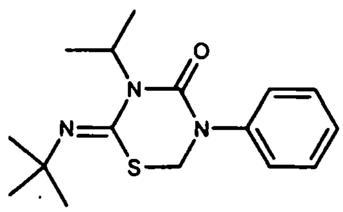

und / oder
(2-15) Pyridalyl

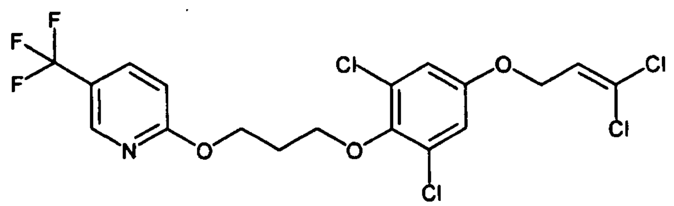

und / oder
(2-16) Rynaxypyr (3-Bromo-N-{4-chlor-2-methyl-6-[(methylamino)carbonyl]phenyl}-1-(3-chlorpyridin-2-yl)-1H-pyrazol-5-carboxamid)

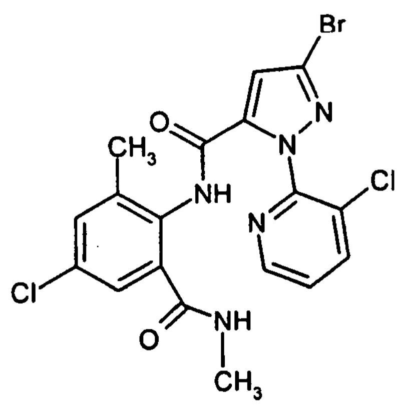

2. Verwendung von Wirkstoffkombinationen, wie in Anspruch 1 definiert, zur Bekämpfung tierischer Schädlinge.

3. Verfahren zur Bekämpfung tierischer Schädlinge, **dadurch gekennzeichnet, dass** man Wirkstoffkombinationen, wie in Anspruch 1 definiert, auf tierische Schädlinge und/oder deren Lebensraum und/oder Saatgut einwirken lässt.

4. Verfahren nach Anspruch 3, **dadurch gekennzeichnet, dass** man einen Wirkstoff der Formel I und einen der

Wirkstoffe (2-1) bis (2-16) zur gleichen Zeit auf Saatgut einwirken lässt.

5. Verfahren nach Anspruch 3, **dadurch gekennzeichnet, dass** man einen Wirkstoff der Formel I und einen der Wirkstoffe (2-1) bis (2-16) zu unterschiedlichen Zeiten auf Saatgut einwirken lässt.

6. Verfahren zur Herstellung insektizider und akarizider Mittel, **dadurch gekennzeichnet, dass** man Wirkstoffkombinationen, wie in Anspruch 1 definiert, mit Streckmitteln und/oder oberflächenaktiven Stoffen vermischt.

7. Verwendung einer Wirkstoffkombination gemäß Anspruch 1 zur Behandlung von Saatgut.

8. Verwendung von Wirkstoffkombinationen gemäß Anspruch 1 zur Behandlung von transgenen Pflanzen.

9. Verwendung von Wirkstoffkombinationen gemäß Anspruch 1 zur Behandlung von Saatgut transgener Pflanzen.

10. Saatgut, welches mit einer Wirkstoffkombination gemäß Anspruch 1 behandelt wurde.

11. Saatgut nach Anspruch 10, welches zur gleichen Zeit mit einem Wirkstoff der Formel I und einem der Wirkstoffe (2-1) bis (2-16) behandelt wurde.

12. Saatgut nach Anspruch 10, welches zu unterschiedlichen Zeiten mit einem Wirkstoff der Formel I und einem der Wirkstoffe (2-1) bis (2-16) behandelt wurde.

## Claims

1. Active compound combinations comprising at least one compound of the formula (I)

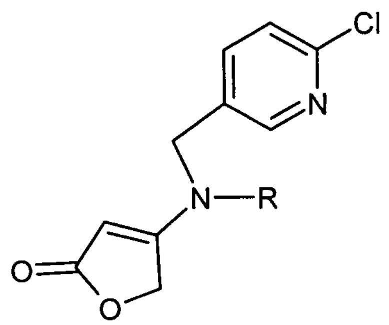

(I)

in which

R represents methyl or cyclopropyl,

and at least one of the active compounds selected from the group consisting of

(A) benzenedicarboxamides,

(2-1) flubendiamide

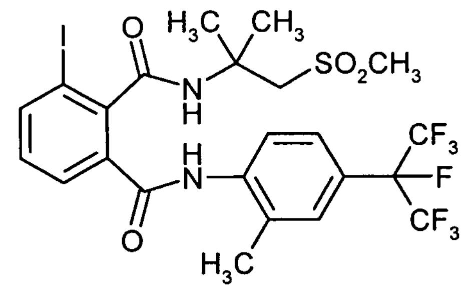

and/or

(B) macrolides, preferably

(2-2) spinosad

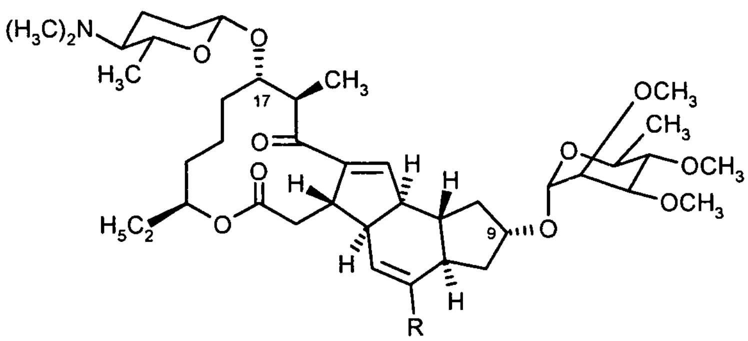

a mixture of preferably
85 % spinosyn A (R = H)
15 % spinosyn B (R = $CH_3$)
and / or
(2-3) spinetoram (ISO-proposed; XDE-175) (known from WO 97/00265 A1, US 6001981 and *Pest Manag. Sci.* 57, 177-185, 2001)

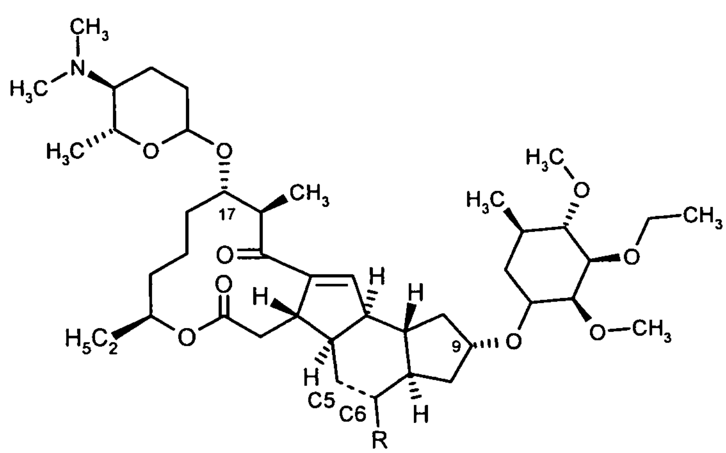

a mixture of two compounds, where in the main component R represents hydrogen and C5 and C6 are

linked by a C-C single bond and in the minor component R represents methyl and C5 and C6 are linked by a C=C double bond,
(2-4) abamectin (known from DE-A 27 17 040)
and/or
(2-5) emamectin benzoate (known from EP-A 0 089 202)

and / or
(C) diacylhydrazines,

(2-6) methoxyfenozide

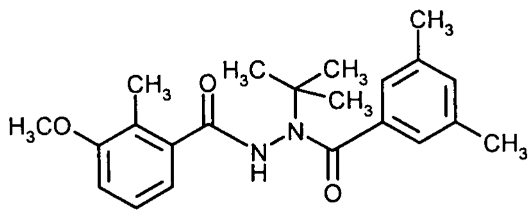

and/or
(2-7) tebufenozide

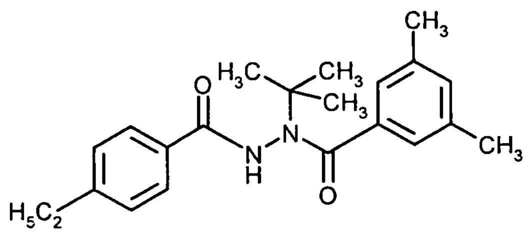

and/or
(2-8) chromafenozide (ANS-118)

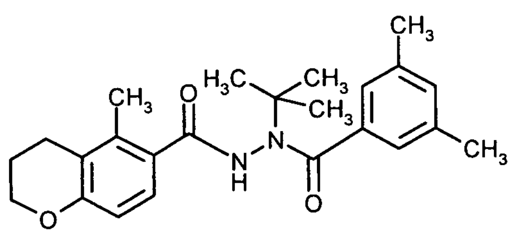

and / or
(D) carboxylates,

(2-9) indoxacarb

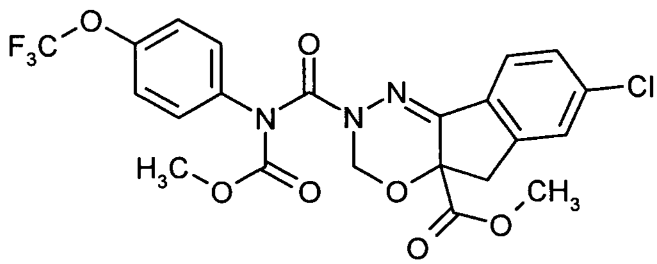

and / or
(E) other insecticidally or acaricidally active substances,

(2-10) fipronil

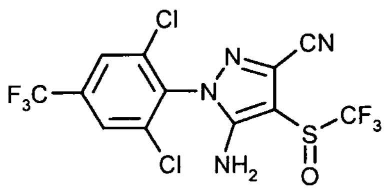

and/or
(2-11) ethiprole

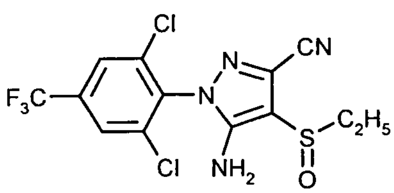

and/or
(2-12) flonicamid

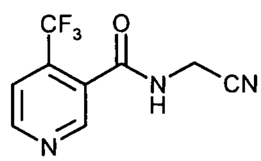

and / or
(2-13) chlorfenapyr

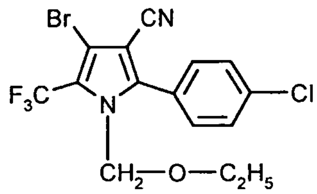

and / or
(2-14) buprofezin

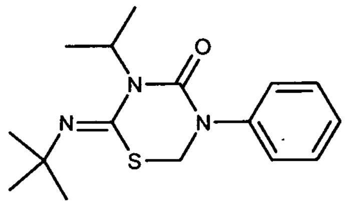

and / or
(2-15) pyridalyl

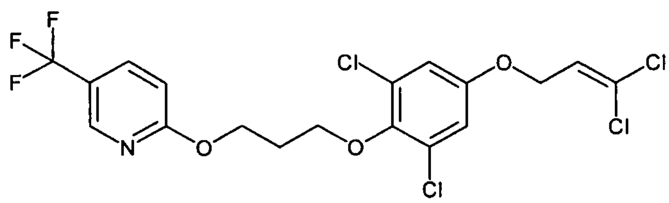

and / or
(2-16) rynaxypyr (3-bromo-N-{4-chloro-2-methyl-6-[(methylamino)carbonyl]phenyl}-1-(3-chloropyridin-2-yl)-1H-pyrazole-5-carboxamide)

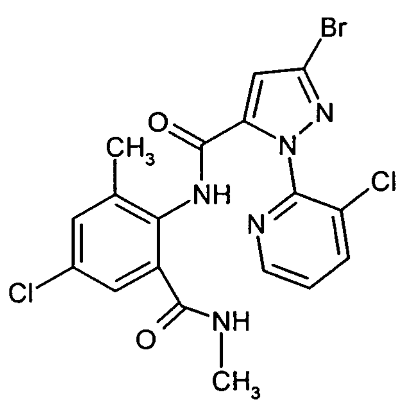

**2.** Use of active compound combinations as defined in Claim 1 for controlling animal pests.

**3.** Method for controlling animal pests, **characterized in that** active compound combinations as defined in Claim 1

are allowed to act on animal pests and/or their habitat and/or seed.

**4.** Method according to Claim 3, **characterized in that** an active compound of the formula I and one of the active compounds (2-1) to (2-16) are allowed to act simultaneously on seed.

**5.** Method according to Claim 3, **characterized in that** an active compound of the formula I and one of the active compounds (2-1) to (2-16) are allowed to act at different times on seed.

**6.** Process for preparing insecticidal and acaricidal compositions, **characterized in that** active compound combinations as defined in Claim 1 are mixed with extenders and/or surfactants.

**7.** Use of an active compound combination according to Claim 1 for treating seed.

**8.** Use of active compound combinations according to Claim 1 for treating transgenic plants.

**9.** Use of active compound combinations according to Claim 1 for treating seed of transgenic plants.

**10.** Seed treated with an active compound combination according to Claim 1.

**11.** Seed according to Claim 10 which has been treated simultaneously with an active compound of the formula I and one of the active compounds (2-1) to (2-16).

**12.** Seed according to Claim 10 which has been treated at different times with an active compound of the formula I and one of the active compounds (2-1) to (2-16).

**Revendications**

**1.** Associations de substances actives, contenant au moins un composé de formule (I)

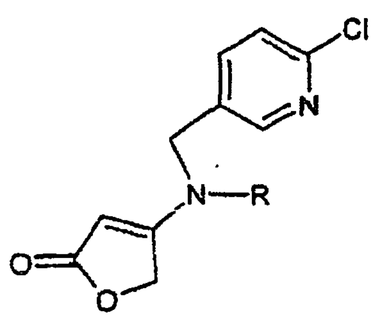

(I)

dans laquelle

R représente le groupe méthyle ou cyclopropyle,

et au moins l'une des substances actives choisies parmi

(A) des benzènedicarboxamides,

(2-1) flubendiamide

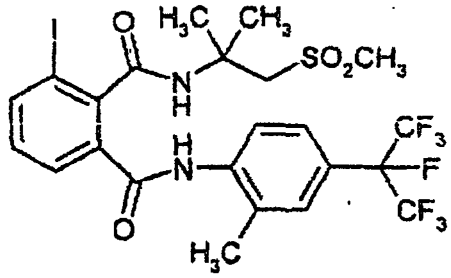

et/ou

(B) des macrolides, de préférence

(2-2) spinosad

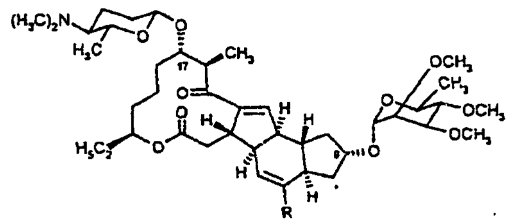

un mélange de préférence de
85 % de spinosyne A (R = H)
15 % de spinosyne B (R = $CH_3$)
et/ou
(2-3) spinetoram (ISO proposé ; XDE-175) (connu d'après WO 97/00265 A1, US 6001981 et *Pest Manag. Sci*. 57,177-185,2001)

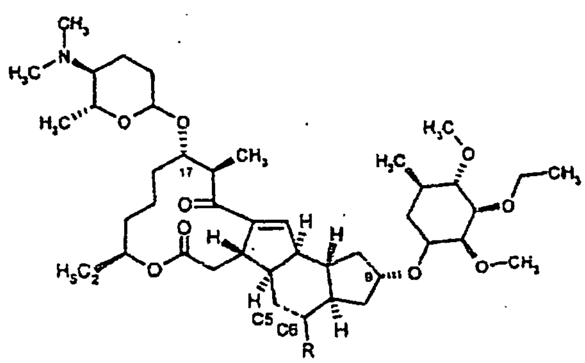

un mélange de deux composés, en tant que composant principal R représentant un atome d'hydrogène et C5 et C6 étant reliés l'un à l'autre par une simple liaison C-C et dans le composant secondaire R représentant le groupe méthyle et C5 et C6 étant reliés l'un à l'autre par une double liaison C=C,
(2-4) abamectine (connue d'après DE-A 27 17 040)
et/ou
(2-5) émamectine-benzoate (connu d'après EP-A 0 089 202)

et/ou
(C) des diacylhydrazines,

(2-6) méthoxyfénozide

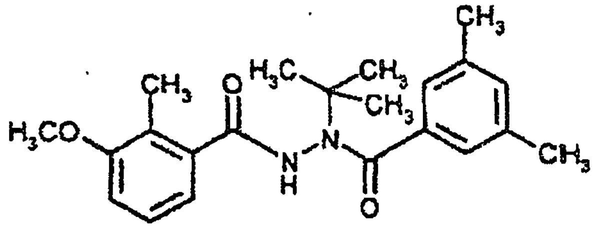

et/ou

(2-7) tébufénozide

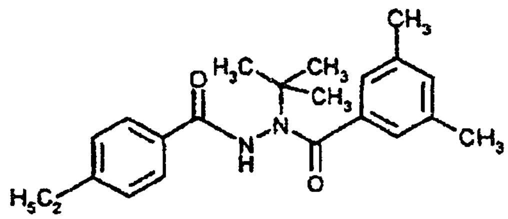

et/ou

(2-8) chromafénozide (ANS-118)

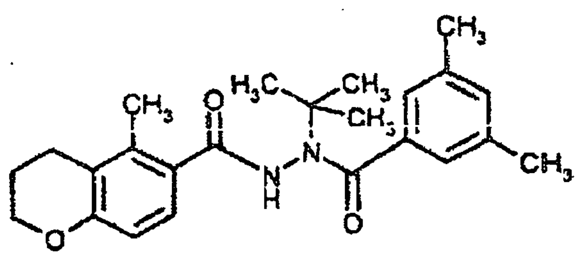

et/ou

(D) des carboxylates,

(2-9) indoxacarb

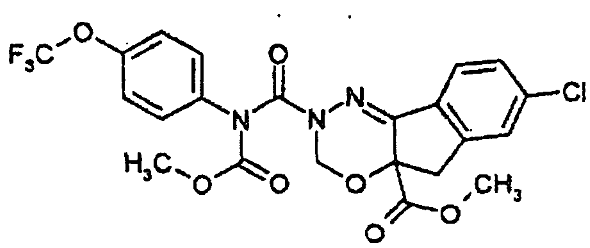

et/ou

(E) d'autres substances à activité insecticide ou acaricide,

(2-10) fipronil

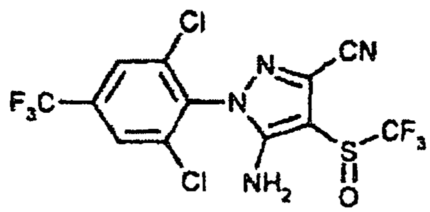

et/ou
(2-11) éthiprole

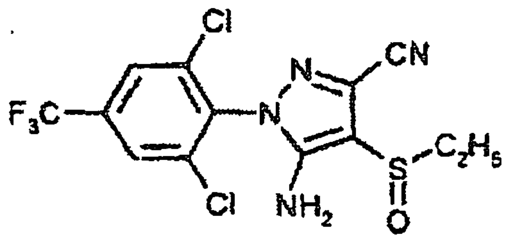

et/ou
(2-12) flonicamide

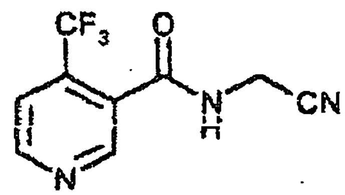

et/ou
(2-13) chlorfénapyr

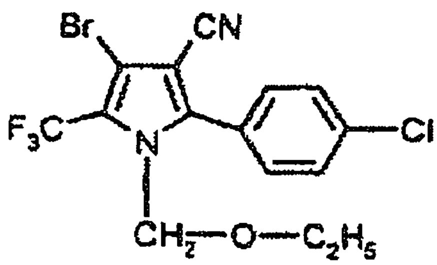

et/ou
(2-14) buprofézine

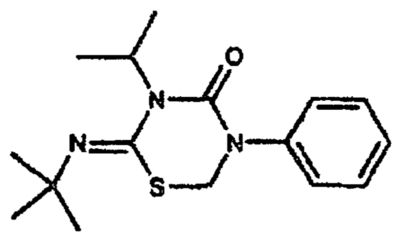

et/ou

(2-15) pyridalyl

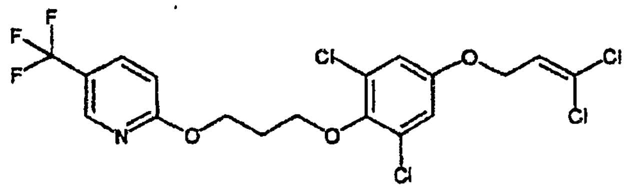

et/ou

(2-16) rynaxypyr (3-bromo-N-{4-chloro-2-méthyl-6-[(méthylamino)carbonyl]phényl}-1-(3-chloropyridin-2-yl)-1H-pyrazole-5-carboxamide)

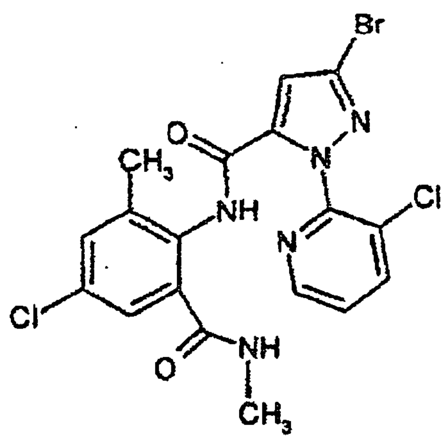

**2.** Utilisation d'associations de substances actives, telles que définies dans la revendication 1, pour la lutte contre des ravageurs animaux.

**3.** Procédé pour la lutte contre des ravageurs animaux, **caractérisé en ce qu'**on fait agir des associations de substances actives, telles que définies dans la revendication 1, sur des ravageurs animaux et/ou leur habitat et/ou des semences.

**4.** Procédé selon la revendication 3, **caractérisé en ce qu'**on fait agir une substance active de formule I et l'une des substances actives (2-1) à (2-16) en même temps sur des semences.

**5.** Procédé selon la revendication 3, **caractérisé en ce qu'**on fait agir une substance active de formule I et l'une des substances actives (2-1) à (2-16) à des moments différents sur des semences.

**6.** Procédé pour la fabrication de produits insecticides et acaricides, **caractérisé en ce qu'**on mélange des associations de substances actives, telles que définies dans la revendication 1, avec des diluants et/ou des substances tensioactives.

7. Utilisation d'une association de substances actives selon la revendication 1, pour le traitement de semences.

8. Utilisation d'associations de substances actives selon la revendication 1, pour le traitement de plantes transgéniques.

9. Utilisation d'associations de substances actives selon la revendication 1, pour le traitement de semences de plantes transgéniques.

10. Semence, qui a été traitée par une association de substances actives selon la revendication 1.

11. Semence selon la revendication 10, qui a été traitée en même temps par une substance active de formule I et l'une des substances actives (2-1) à (2-16).

12. Semence selon la revendication 10, qui a été traitée à des moments différents par une substance active de formule I et l'une des substances actives (2-1) à (2-16).

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0539588 A
- WO 9322297 A
- WO 9310083 A
- DE 2641343 A
- EP 347488 A
- EP 210487 A
- US 3264177 A
- EP 234045 A
- EP 1006107 A
- EP 0375316 A
- WO 9700265 A1
- US 6001981 A
- DE 2717040 A
- EP 0089202 A
- EP 0639559 A
- EP 339854 A
- EP 0496342 A
- WO 9211249 A
- EP 0295117 A
- DE 19653417 A
- EP 0580374 A
- EP 0347488 A
- WO 9611909 A
- WO 03015519 A


### In der Beschreibung aufgeführte Nicht-Patentliteratur


- *Pest Manag. Sci.,* 2001, vol. 57, 177-185
- *Proc. Br. Crop Prot. Conf. - Pests Dis.,* 1981, vol. 1, 59
- **S.R. Colby.** *Weeds,* 1967, vol. 15, 20-22